(19)

**Europäisches Patentamt**
**European Patent Office**
**Office européen des brevets**

(11) **EP 2 813 979 A1**

(12) **EUROPEAN PATENT APPLICATION**

(43) Date of publication:
**17.12.2014 Bulletin 2014/51**

(51) Int Cl.:
*G06Q 10/04* (2012.01)   *G06Q 50/06* (2012.01)

(21) Application number: **14172231.4**

(22) Date of filing: **12.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.06.2013 JP 2013125187**

(71) Applicant: **Hitachi Ltd.**
**Tokyo (JP)**

(72) Inventors:
• **Iwamura, Kazuaki**
  **Chiyoda-ku, Tokyo 100-8280 (JP)**
• **Tonooka, Hideki**
  **Chiyoda-ku, Tokyo 100-8280 (JP)**
• **Mashita, Yuichi**
  **Chiyoda-ku, Tokyo 100-8280 (JP)**

(74) Representative: **Moore, Graeme Patrick et al**
**Mewburn Ellis LLP**
**33 Gutter Lane**
**London**
**EC2V 8AS (GB)**

(54) **Electric power consumption management system and method**

(57) The present invention performs the following to estimate the power consumption of the whole area. For a "building" (604) from which power consumption data cannot be acquired, the present invention identifies a building (602 or 603), whose attribute is similar to that of the building (604) and from which power consumption data can be acquired, and estimates the power consumption of the "building" (604), from which power consumption data cannot be acquired, from the power consumption data on the identified building (602 or 603). The "building", which is a unit for calculating and managing power consumption data, is a concept that includes facilities, structures, and other objects.

## FIG. 1

**Description**

BACKGROUND OF THE INVENTION

The present invention relates to a technology for controlling power supply using a large amount of data, the so-called big data, about electric power consumption amount and electric power generation/storage amount.

In particular, the present invention relates to a technology for determining a power supply method by managing these data and calculating the total of consumer's power consumption under control of Information and Control. More in particularly, the present invention relates to a technology, implemented by Information and Control, for acquiring power consumption data sent from buildings, for forecasting demands, and for consuming a combination of existing company-supplied power and regionally stored/generated power such as electric power stored at night or generated by solar power generation.

Conventionally, electric power is supplied based on a contract with a power company that has thermal power stations and nuclear power stations. When the amount of power supply to a building becomes smaller than the amount of power demand, the power supply is stopped. However, when smart grid is used where power supply and demand is processed based on a two-way information exchange between a power supplier and a power user or when a power consumer becomes a power supplier who has a solar power generation system, the information not only on the user's power consumption but also on user's power generation is acquired to provide an efficient power usage method. In smart grid, when the power demand is high, a consumer reduces the power consumption or switches the power to the storage power, stored at midnight at which the electrical charge is low and the power consumption is small, or use the storage power generated via solar power generation or obtained from an electric vehicle. These actions lead to a power consumption reduction called peak-shift in which the high power-demand time zone is shifted. The application of such a method requires that information on the power consumption in homes, offices, and commercial facilities be collected to acquire the information on the power usage status of the whole area. The following technologies are proposed to measure the power supply and demand balance and, based on the measured result, to control the power supply.

JP-A-2012-227928 describes a selection method of communication means for use when data is sent from a power meter that has the communication function. JP-A-2012-165549 describes a method for calculating the total power consumption via a network based on the total calculation result of power amounts, consumed by multiple electric devices, for controlling the power consumption. WO2012/066651A1 describes a method for calculating the total of power consumption using an information infrastructure and for calculating the surplus power using regional power generation information, such as solar power generation, to give an incentive to power consumers for using those new powers. JP-A-2012-60789 describes a method for using power consumption data to measure the power supply and demand balance.

SUMMARY OF THE INVENTION

A method for controlling the power usage status using information on the power usage is called a demand response. The use of this method is known as described in WO2012/066651A1. A technology for controlling the supply and demand balance is described in JP-A-2012-60789. In addition, a method for estimating and controlling the whole consumption amount based on the power usage status is described in JP-A-2012-227928 and JP-A-2012-165549.

However, the publications given above do not describe a case in which information on the power consumption value of buildings is not acquired from all buildings included in an area/town or when the information that can be acquired is limited. In fact, when there are many buildings from which data cannot be acquired, the power consumption status of that area/town is not known only from the acquired power consumption data. In particular, the power consumption of the commercial facilities, offices, and factories affects the power consumption tendency of the whole area. Therefore, when power consumption data on those buildings is not acquired, the power consumption values of those buildings must be estimated. The power supply and demand of an area/town is well balanced by estimating the future power consumption values with such an accuracy that the estimated power consumption values are not so much different from the actual power consumption values. Thus, it is necessary to calculate the power consumption amounts of all buildings included in an area/town and, therefore, the power consumption of the buildings in an area is estimated from the power consumption amount that can be acquired in the area.

The present invention proposes a technology for solving the following two problems:

(1) For the buildings in an area/town from which power consumption data is not acquired or from which power consumption data cannot be acquired due to an apparatus failure, the power consumption amount of those buildings is estimated to estimate the power consumption amount of the area/town.

(2) When the estimated power consumption of an area/town includes the power generated or stored in the area/town, the power is discharged within the area/town or shared with another area/town to make a peak shift or to solve a tight supply and demand condition.

To solve the above problems, the present invention employs the following configuration. That is, the present invention performs the following to estimate the power consumption of the whole area. For a "building" from which power consumption data cannot be acquired, the present invention identifies a building, whose attribute is similar to that of the building and from which power consumption data can be acquired, and estimates the power consumption of the "building", from which power consumption data cannot be acquired, from the power consumption data on the identified building. The "building", which is a unit for calculating and managing power consumption data, is a concept that includes facilities, structures, and other objects.

More specific solution means is as follows. Information and Control is used that acquires a large amount of power consumption data. This Information and Control acquires power consumption data from an energy management system, installed in the buildings such as a home or a building, stores the acquired power consumption data and, at the same time, performs variability analysis of an average power consumption based on the attributes such as times, locations, and building types. In addition, for a building from which power consumption data cannot be acquired, Information and Control performs the following processing to estimate the power consumption value. (1) Estimate a power consumption value using map information, attribute information, and power consumption data on a similar building.

To estimate a power consumption value, map information, building data described in a map, attributes related to a building shape, and power consumption data analyzed for each building are used. A map is vector data composed of coordinate columns, and a unique number for identifying a building is attached to vector data representing a building. The attribute number is used to establish the relation among the building attributes of buildings. Building attributes include a number (code) indicating the type of building such as a home or commercial facilities and, for a home, include information indicating whether residents are at home or not.

Using these attributes, the power consumption data on a building of the same type, held in Information and Control as analysis data, is searched for. For a building from which power consumption data cannot be acquired, the average of these history data is calculated for use as the power consumption data on that building. Power consumption data cannot be acquired if the acquisition of power consumption data is not permitted or if data is not sent or received due to a failure in an apparatus. Even in such a case, this method allows power consumption data to be acquired.

In some areas, power is stored in a time zone in which electricity charge is low or electric power is generated by a solar power generation system. This stored or generated power can be used in a time zone in which the electricity charge is high or when the power supply and demand is tight. To solve the problems, the following configuration is employed. (2) Perform power control based on future forecasting.

Power discharge or power sharing requires the forecasting of power consumption in each area/town. To satisfy this requirement, the following two functions are provided: one is the statistical analysis function that acquires power consumption data in each area/town and the trend variation forecasting function that forecasts a variation in electric power using the past analysis results of the power consumption in an area/town. The statistical analysis function collects power consumption data on the buildings included in each area/town, and the trend variation forecasting function forecasts the trend of the future, based on the analysis results of the past, to forecast a ratio between power supply and power consumption. As a result, the amount of discharge to an area/town and the amount of shared-power supply between areas/towns are determined.

According to the present invention, even if there are one or more buildings from which power consumption data cannot be acquired, it becomes possible to estimate the whole power consumption of an area more accurately.

INDUSTRIAL APPLICABILITY

In this embodiment, because the information on the power usage status of the houses arranged according to an area is available, an area manager can discharge power that is charged in the area. In particular, the power consumption amount of a building, if not known, can be estimated from a similar building. When there are storage batteries, power can be discharged according to a request from a user.

Not only a power company but also an area manager, which is an organization for increasing power consumption efficiency in an area, can manage the cooperation between sensor data information and the discharge control of regionally generated/stored power. An area manager performs this cooperation using a data center.

BRIEF DESCRIPTION OF THE DRAWINGS

FIG. 1 is a diagram showing a general system configuration made up of a power measurement sensor, Information and Control, and a power control system in one embodiment of the present invention.
FIG. 2 is a diagram showing the configuration of Information and Control for acquiring power consumption data and storage power data in an area/town and for forecasting power consumption in one embodiment of the present invention.

FIG. 3 is a diagram showing the concept of an area/town and a network for acquiring power consumption data and power-generation/storage power data in one embodiment of the present invention.

FIG. 4 is a flowchart showing the flow of processing performed by Information and Control for acquiring power consumption data in an area and for determining a discharge time of regionally stored power and its amount in one embodiment of the present invention.

FIG. 5 is a flowchart showing the flow of processing performed by Information and Control for acquiring power consumption data in an area and for determining a discharge time of regionally stored power and its amount in one embodiment of the present invention. (continuation of FIG. 4)

FIG. 6 is a flowchart showing the flow of processing performed by Information and Control for acquiring power consumption data in an area and for determining a discharge time of regionally stored power and its amount in one embodiment of the present invention. (continuation of FIG. 5)

FIGS. 7A-7C are diagrams showing the structure of in-memory and the content of data in one embodiment of the present invention.

FIG. 8 is a diagram showing a method of searching for a building from which data cannot be acquired in one embodiment of the present invention.

FIG. 9 is a diagram showing a power consumption value estimation method for a building, from which data cannot be acquired, in one embodiment of the present invention.

FIG. 10 is a diagram showing an example of the content of apparatus data in one embodiment of the present invention.

FIG. 11 is a diagram showing a method for calculating the total power consumption value of an area/town in one embodiment of the present invention.

FIG. 12 is a diagram showing the trend forecasting of power consumption in one embodiment of the present invention.

FIG. 13 is a diagram showing a configuration of a discharge management table in one embodiment of the present invention.

FIG. 14 is a diagram showing an apparent contracted power for power discharge and power sharing in one embodiment of the present invention.

DESCRIPTION OF THE EMBODIMENTS

One embodiment of the present invention is described in detail below with reference to the drawings. In this embodiment, information on the power consumption of a whole area can be obtained by acquiring power consumption data on each building and, for a building from which data cannot be acquired, by using power consumption data on a similar building. In addition, the power consumption status of a whole area/town is acquired with high forecasting accuracy and, if storage power is available, the discharge amount and the shared-power amount among areas/towns are calculated. In this manner, the efficiency of power consumption is increased.

This embodiment is executed by the cooperation among the following components via a network: Information and Control implemented on a computer system, a computer system on which an application is installed such as a power control system that discharges a storage battery, and a sensor system that has the communication function such as a home energy management system and a building energy management system.

The installation of a power consumption sensor, which is installed in a building for two-way communication between a power company and a user, allows information on the power usage status of a power user to be acquired. In particular, an apparatus called a Home Energy Management System (HEMS) or a Building Energy Management System (BEMS) is available for use. With a sensor installed in individual apparatuses in a building, the information on the power consumption of each apparatus, which cannot be obtained by a power meter only, can be acquired. These data is acquired as power consumption data in a building and, by adding up these power consumption data, the information on the power consumption in each area/town can be obtained. The use of power consumption data on each building or on each area/town gives the following advantages. One of those advantages is that power can be charged in a time zone in which the electricity charge is low. Another advantage is that, when power regionally generated by solar power generation or by fuel cells is available, a power peak-shift (the usage time zone in which the power consumption is the maximum is shifted to a time zone in which the power consumption is low) can be performed by discharging the regional power in a time zone in which the electricity charge is high and the power consumption is high. A still another advantage is a reduction in the electricity charge. Therefore, the power consumption required for resident lives or commercial/business activities is optimized while maintaining a balance between power supply and consumption. In this manner, the power-consumption tendency information not only on buildings but also on an area/town can be collected for use in the discharge operation or power sharing operation. In the description below, the present invention assumes that the discharge facility described above is available. To accomplish the regional operation of power as described above, the following problems must be solved:

- Power consumption data on all buildings included in an area/town cannot always be acquired. In fact, when a sensor apparatus fails, the power consumption data cannot be acquired. In addition, there are some buildings in which such a sensor apparatus is not installed.
- Power is charged or generated on an area/town basis for better discharging power at an appropriate time and, therefore, it is necessary to determine a discharge time. Discharging can be performed in a building in which the use of discharged power is allowed. In addition, the power consumption differs between buildings; for example, the power consumption differs among homes, offices, and commercial facilities. The power consumption varies during a day and differs between a weekday and a holiday.

It is impossible for the owner of an individual building to manage the power consumption of a whole area/town, to discharge regionally charged/generated power, and to manage the power sharing between areas/towns. Instead, an operator called an area manager manages these tasks. The power management of an area manager, that is, the management processing in the system in this embodiment according to the operation of an area manager, is performed according to the following steps.

- Collect information on the power consumption of an area/town and forecast the variation.
- Discharge regionally generated power or night storage power to perform a peak shift when the result of variation forecasting indicates that the power consumption will become tight.
- Discharge regionally generated power or night storage power when the information indicates the power supplied to an area will be stopped or reduced due to an accident or a failure in the power station or in the power distribution system.

Power generation and night power storage on an area/town basis contributes to the optimization of a balance between the power supply and the power consumption of an area/town. However, the supply of power in this way requires the cooperation with a conventional power distribution system managed by an infrastructure manager and, therefore, requires the installation of an area management system that manages each area/town. In this embodiment, such an area management system manages the power consumption of an area/town and, by discharging regionally generated power and night storage power, reduces the electricity charges and solves a power shortage problem. In addition, the system collects information on the power of multiple areas/towns and supplies the shared power of an area/town, which has surplus power, to an area/town in which the shortage of power or an increase in the power usage amount is expected.

The area management system manages and controls the power consumption status of multiple buildings and the storage amount of storage apparatuses. More specifically, the area management system performs the following processing.

- Acquire power consumption data and power storage data on the buildings included in a management range.
- Confirm whether the acquired power consumption values are correct.
- Estimate the power amount for power consumption data on the buildings and facilities from which data cannot be obtained and acquire the information on the variation tendency of an area/town.
- Calculate the total of power consumption of the whole area.
- Forecast the change trend of future power consumption in an area/town using the acquired power consumption data and history data acquired in the past.
- Discharge regionally generated power or storage power based on the tendency of power consumption of the whole area and, in addition, share discharged power among areas/towns.

Power consumption data is acquired and analyzed by a system called Information and Control. The area management system is configured by a combination of Information and Control, the sensors that measure the power consumption, and a power control system that controls the discharge of power. The operation of a system for managing the area management system is performed by an area manager. The area manager need not be an individual but may be a specific organization or a managerial position.

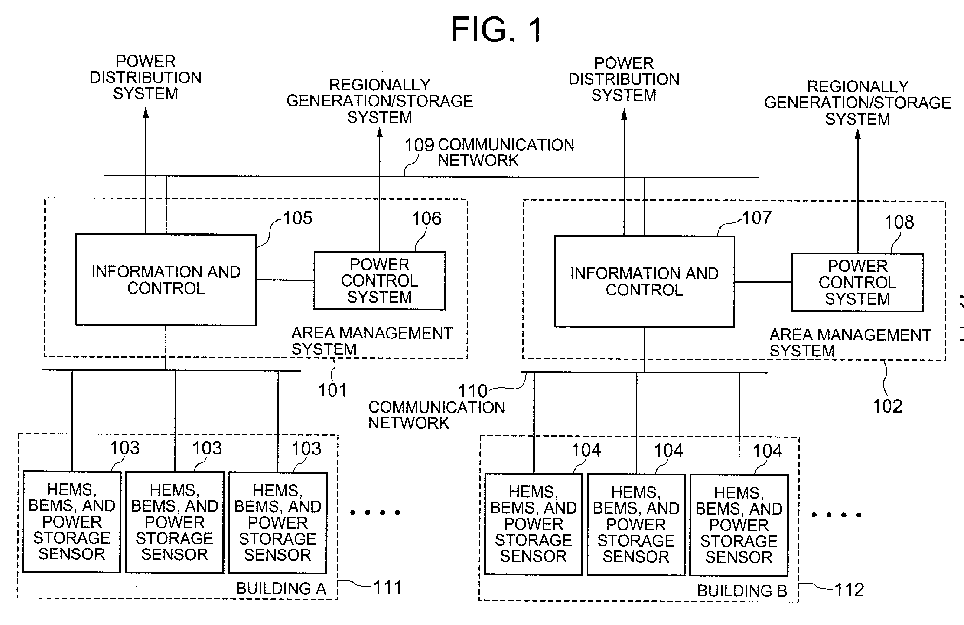

Information and Control is a system that performs information processing. FIG. 1 shows the configuration of the whole system that includes Information and Control. There are an area management system 101 and an area management system 102, one for each area/town managed by an area manager. The area management system 101, configured by Information and Control 105 and a power control system 106, is connected to an HEMS, BEMS, and power storage sensor 103 that are power consumption measurement sensors installed in building A 111. The area management system 102, configured by Information and Control 107 and a power control system 108, is connected to an HEMS, BEMS, and power storage sensor 104 that are power consumption measurement sensors installed in building B 112. The HEMS, BEMS, and power storage sensor are installed in multiple buildings. Information and Control 105 acquires power consumption data, power storage data, and apparatus data, which describes the soundness of the power-related apparatuses, from the HEMS, BEMS, and power storage sensor 103 installed in the building and manages the acquired data. At the same time, Information and Control 105 calculates the total power consumption amount and the total power storage amount, analyzes the power consumption variation and, after that, sends the result to an existing power distribution system. In addition, Information and Control 105 works with the power control system 106 or 108 to acquire and analyze the status data of regionally-generated/stored power that is stored at night or generated by solar power generation. At the same time, by checking the power consumption status, Information and Control 105 discharges power or shares power between areas/towns. Power is shared between not only the areas/towns managed by the same area manager but also between areas/towns managed by different area managers. Data such as power consumption data is acquired by a communication network 110 such as the Internet or a leased line. The information, such as information on power sharing, is shared among the area managers via a communication network 109.

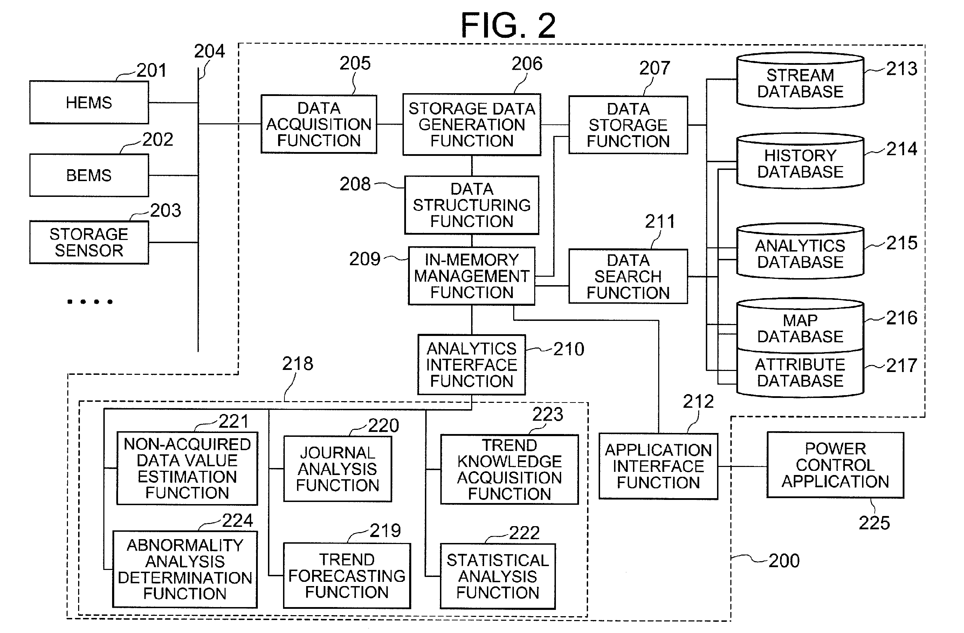

FIG. 2 shows the functional configuration of the area management system in this embodiment. The following describes the roles (processing) of the functions of the system.

- Information and Control 200: This indicates the whole of Information and Control.
- Power consumption measurement sensor (HEMS) 201: This function calculates the total of the power consumption amount of each apparatus in a home and then sends the result to Information and Control. The measured values are sent periodically.
- Power consumption measurement sensor (BEMS) 202: This function calculates the total of the power consumption amount of an office building or an apartment house and then sends the result to Information and Control. The measured values are sent periodically.
- Storage battery sensor 203: This function measures the power storage amount and the discharge amount of a storage battery installed in an area/town and then sends the result to Information and Control. The measured values are sent at a predetermined time, either periodically or at an interval.

Communication network 204: This is a network for sending sensor data to Information and Control.

Apparatus data is also acquired from the HEMS 201, BEMS 202, and storage battery sensor 203 described above at a predetermined time, for example, periodically. The apparatus data describes the apparatus type information, connection information, other operation information (on/off), and soundness information (normal/failed) on the apparatus parts of the apparatuses installed in a building and connected to the network.

Data acquisition function 205: This function acquires the measurement values of the power consumption amount and the storage power amount periodically sent from the HEMS 201, BEMS 202, and storage battery sensor 203.

Storage data generation function 206: This function converts data for storing acquired power consumption data, storage power data, and apparatus data in a stream database 213. The data structure is a key-value pair method. The key, which indicates the type of data, is described by a code indicating power consumption. In this case, the value is the acquired value of power consumption data, and the acquired data itself is described as the value.

Data storage function 207: This function stores data in a database. The function stores power consumption data, storage power data, and apparatus data, each represented in a key-value format, into the stream database (213). In addition, the function stores structured data in a history database 214 and stores the analysis result of power consumption and power storage in an analytics database 215.

Data structuring function 208: This function acquires data, required for analysis, from data acquired in the key-value method and converts the acquired data into generic items to be used by Information and Control. This function corresponds to retrieving data from a key and a value. That is, the function corresponds to the processing in which data (data type, apparatus number, apparatus type, data acquisition time, data acquisition interval, and measured value (power consumption value, storage power amount, apparatus status)) is retrieved and then arranged in a predetermined order.

In-memory modeling function 209: This function expands not only power consumption data, storage power data, and apparatus data but also region/town map-attribute data into a memory for high-speed access and, at the same time, expands history data into a memory for analysis. The function also expands data obtained as a result of analysis.

Analytics interface function 210: This interface function allows the analytics application (Analytics) software 218 to cooperate with other functions. The analytics software 218 is composed of functions for performing trend analysis based on power consumption data, for calculating the total of area/town data, for estimating power consumption data upon detection of power consumption loss, for analyzing an apparatus abnormality described in apparatus data, and for analyzing the frequency of apparatus data loss.

Data search function 211: This function searches the history database 214, analytics database 215, map database 216, and attribute database 217 for power consumption data history, data statistic processing results, and data related to a position in a map and stores the search result in an in-memory.

Application common interface 212: This interface function allows a power control function 225 to cooperate with other functions to execute the storage battery charge/discharge application using data analysis results.

Stream database 213: This database stores the acquired result of power consumption data and apparatus data. The result is stored in a key-value format.

History database 214: This database stores structured data, which is structured by retrieving analysis-required item values from power consumption data, storage data, and apparatus data, as history data.

Analytics database 215: This database stores the analysis of power consumption data (variability analysis) and power consumption data collected in geographical units such as areas/towns. For variability analysis, the results created by forecasting the future are stored. Data estimated on an area/town basis is used for collecting area/town statistics.

Map database 216: This database is used to determine the positional relation of an area/town. This database is used also to calculate the area of a house shape. This database also stores satellite photograph images and aerial photograph images which are used as a background image.

Attribute database 217: This database stores attributes about a map. For example, a building type, use of a building, the number of persons in a building, and the height of a building are attribute data.

Analytics function 218: This function includes a group of functions that perform data variability analysis or statistical processing, as well as functions that determine an apparatus abnormality, using data stored in the history database 214 or recently acquired power consumption data and apparatus data. The analytics software 218 is configured by a trend forecasting function 219, a journal data analysis function 220, a non-acquired data value estimation function 221, a statistical analysis function 222, a trend knowledge acquisition function 223, and an abnormality analysis determination function 224.

Trend forecasting function 219: This function compares the variations in power consumption and water services with the past history for use in analysis and future variation forecasting. Here, this function forecasts a variation over time, a variation that will be generated according to positions, and a variation that will be generated at an event time such as a long vacation.

Journal data analysis function 220: This function checks acquired apparatus data to detect an apparatus part failure or an apparatus abnormality caused by the loss of apparatus data itself and, thereby, determines an abnormality in the measured values.

Non-acquired data value estimation function 221: This function estimates the power consumption data on a building, for which data has not yet acquired, from the information (building area, building type, building height, personnel organization, etc.) searched for from the attribute database 217.

Statistical analysis function 222: This function performs statistical calculation to collect statistics on power consumption data on each area/town or statistics on hourly power consumption.

Trend knowledge acquisition function 223: This function associates power consumption values with a time, a period, and an area/town and acquires information, such as variation speeds, corresponding to a situation determined by the association.

Abnormality data analysis function 224: This function compares acquired power consumption data with apparatus data to determine whether data is normal or abnormal.

Power control function 225: This function references the regionally-generated/stored power amount, sends the discharge control signal to the control apparatus, and controls the power distribution apparatus for managing the discharge amount and for sharing power among areas/towns.

The functions described in this specification are executed by a computer program. That is, a device that works as a computer reads the computer program, and an arithmetic unit such as the CPU executes the operation processing according to the content, which has been read, for executing the functions.

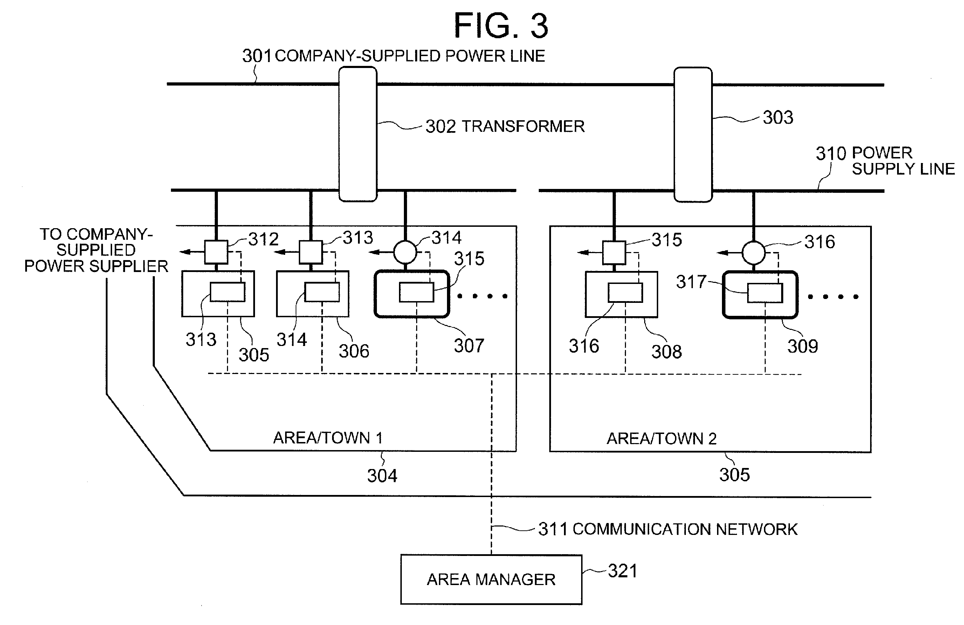

An area/town indicates a management unit that configures the whole of a power management range managed by an area manager. FIG. 3 shows the concept of an area/town. An area/town, a geographic range, indicates a range to which electric power is supplied from a transformer. An area/town includes buildings that consume electric power. In some cases, one area/town includes two types of building: one is a building from which power consumption data is acquired and the other is a building from which power consumption cannot be acquired. FIG. 3 shows two areas/towns, 304 and 305. The electric power used by the buildings and facilities included in each area/town is supplied from a transformer 302 or 303 to which electric power is supplied from a company-supplied-power line 301. Electric power is supplied from the transformer to a building via a power supply line 310. The buildings included in the areas/towns include not only buildings 305, 306, and 308 that consume electric power but also houses 307 and 309 each of which has a regional power-generation/power-storage system. This regional power-generation/power-storage system stores electric power supplied in a low electricity-charge time zone or electric power generated by solar power generation.

An area/town sometimes includes a building specifically intended for regional power-generation/power-storage. The power consumption information is sent to the supplier of company-supplied power via power meters 312, 313, and 315. The power consumption information is sent also to an area manager 321 (hereinafter, the area manager 321 refers to an information processing device (computer) operated by an area manager (person)) via the HEMS or BEMS, such as that shown by the reference numerals 313, 314, and 315, over a communication network 311. The power meters 315 and 317 measure the electric power amount of power generation/storage, and the measured amount is sent to the area manager 321 or to the company-supplied power operator (Note that the measured amount is sent to the computer used by the manager or the operator. This applies also to the description below).

The area manager 321 cannot acquire all power consumption data on the buildings included in the area/town. The power consumption data is supplied from a building, which has agreed to supply data by contract, to the area manager 321, but the power consumption data cannot be acquired from a building that has not yet agreed to supply data. In addition, in some cases, there is a building in which an apparatus such as a power meter is not installed or data cannot be acquired due to an apparatus failure. Therefore, one area/town may sometimes include a building that supplies data to a different area manager (to that manager's computer). In addition, the area manager 321 may acquire power consumption data from two or more areas/towns.

Here, the destinations to which the power consumption data is supplied may be limited to which have been agreed as the destination.

This means that, to allow the area manager 321 to acquire information about power consumption in the whole area/town, it is necessary not only to acquire power consumption data on the buildings in the area manager's management range that have agreed to supply data but also to estimate power consumption data on the houses that do not supply data. In addition, in such an area/town, it is necessary for the area manager 321 to collect the following data: data on the regionally generated solar power or power obtained from an electric vehicle, data on the electric power stored in a low-charge time zone and discharged at a power consumption peak time, and data on shared power supply to an area/town where there is no power-generation/power-storage facility. It is assumed that data on these types of power can be acquired by the area manager 321. By doing so, the area manager 321 obtains information on the power consumption status in an area/town, included in the management range, for determining whether to discharge.

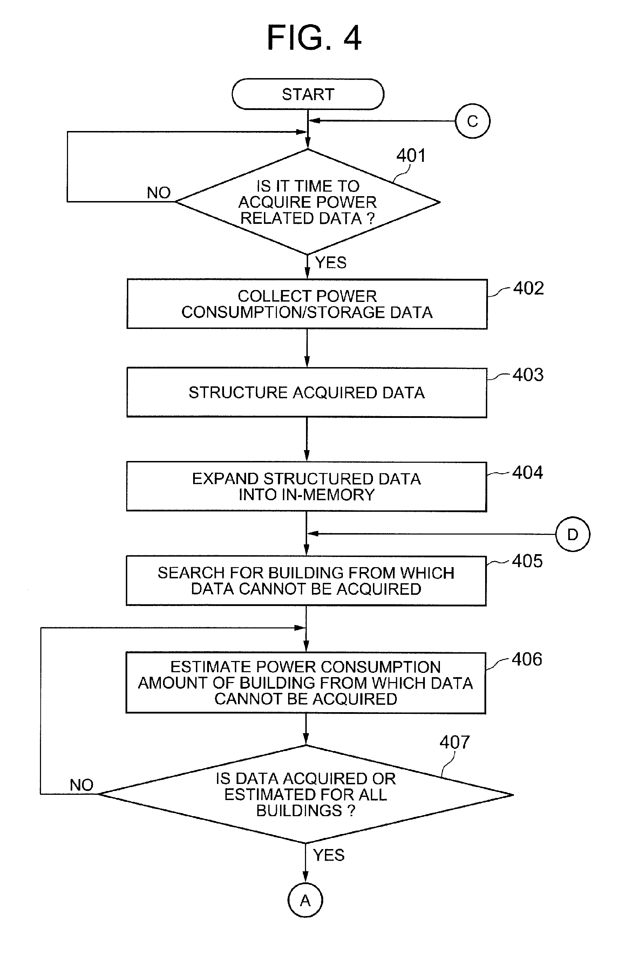

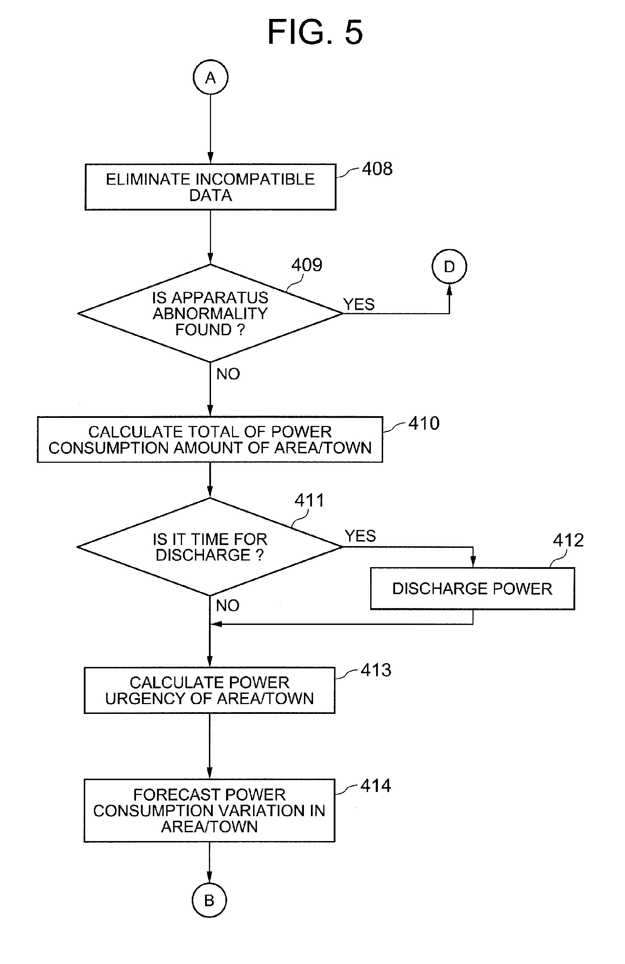

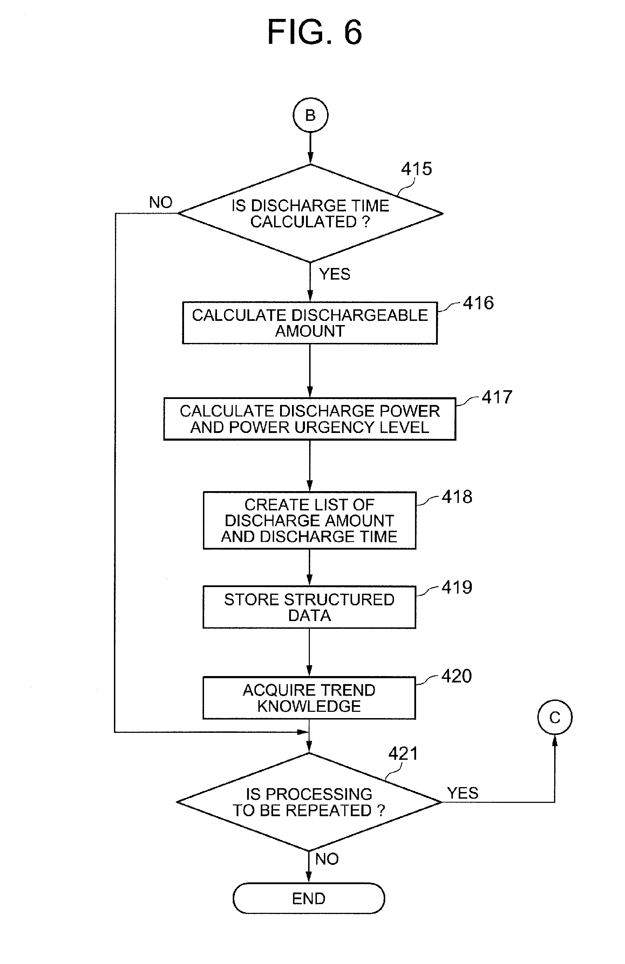

FIGS. 4 to 6 show the steps that are executed by the area manager 321 from the time power consumption data and power storage data are acquired to the time electric power is discharged. In the description, these steps are associated with the functions included in Information and Control shown in FIG. 2. The following describes the content of each step. Step 401: Determine whether it is a time for acquiring power related data.

The area manager 321 determines whether it is a time for acquiring power consumption data, power storage data, and apparatus data. The area manager 321 acquires these data at a predetermine interval.

Step 402: Acquire power consumption data and power storage data.

The area manager 321 acquires the power consumption data, power storage data, and apparatus data on the buildings from the HEMS 201 or BEMS 202 via the communication line 204 such as the Internet. The HEMS 201 is a data acquisition device for collecting information on the electric power usage status of each apparatus in a home. The BEMS 202 is a data acquisition device for collecting information on the electric power consumption status of each apparatus in an office building or a commercial building. The area manager 321 also acquires the storage amount data and the discharge amount data of the regional power-generation/power-storage system from the storage sensor 203. At the same time, the area manager 321 acquires the apparatus data on apparatus failures from the HEMS 201, BEMS 202, and storage sensor 203, including failures generated in those devices. The HEMS 201, BEMS 202, and storage sensor 203 may be an apparatus, such as a smart meter, that has the communication function for sending the power consumption amount information to the power supplier. The data acquisition function 205 acquires the power consumption data and the storage data, the storage data generation function 206 converts the acquired data to a key-value format, and the data storage function 207 stores the converted data in the stream database 213. The key value of data in the key-value format indicates the data type indicating whether the data is power consumption data or storage data, and the value of the data indicates the acquired value of the power consumption data or storage data. Therefore, acquired data is once stored in the stream database 213 with a key value added to the acquired data.

Step 403: Structure the acquired data.

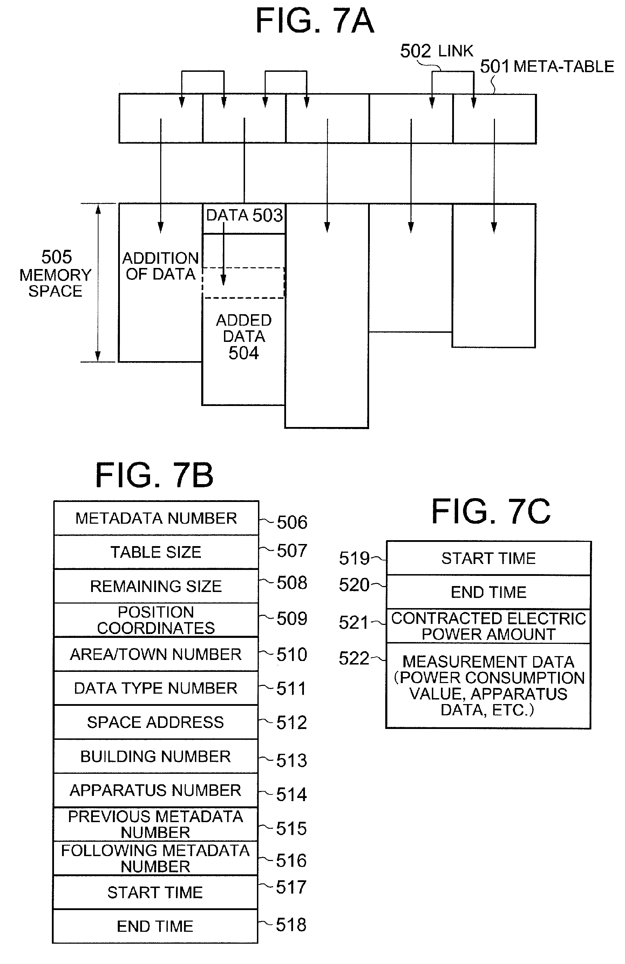

The data structuring function 208 separates data, which indicates the power consumption of an apparatus necessary for analysis, from the acquired power consumption data and the storage data. The power consumption data and the storage data may be described in a generic XML (eXchange Markup Language) format. An XML-format data item is described using a start tag <**> and an end tag </**>. The item name of data is coded within parentheses (<>), and data is coded between the start tag and the end tag. When the manufacturers of the HEMS 201, BEMS 202, and storage sensor 203 are different, different item names are coded. Therefore, a table of correspondence between the item names of manufacturers and the generic item names managed by Information and Control is used to find a correspondence between a power-consumption/storage related item name, to which an XML tag is attached, and a generic item names required by Information and Control to obtain a value corresponding to the generic item. The in-memory modeling function 209 performs unit conversion for an obtained value, if necessary, and expands the obtained value into memory. The generic item names are those corresponding to reference numerals 509 to 514 in FIG. 7B. FIGS. 7A-7C show the structure of memory data managed by the in-memory modeling function 209.

Step 404: Expand structured data into in-memory.

As shown in FIG. 7A, in-memory data is composed of a meta-table 501, in which data locations and its content are described, and a memory space that is a memory space 505 in which power consumption data is stored.

As shown in FIG. 7B, the meta-table 501 is composed of the following items: a metadata number 506 that indicates the sequence number of data, a table size 507 that indicates the size of the data storage area, a remaining size 508 that indicates the remaining size of the area in which data can be stored, position coordinates 509 represented by terrestrial coordinates (latitude, longitude), an area/town number 510 that identifies an area/town, a data type number 511 that distinguishes among power consumption data, storage data, apparatus data, and area/town total, a memory space address 512 in which data is actually stored, a building number 513 used to identify a building, an apparatus number 514 that is a unique number of an apparatus from which data is sent, a previous metadata number 515 that indicates the metadata number of the previous metadata, a following metadata number 516 that indicates the metadata number of the following metadata, a start time 517 that stores the actual data start time at which actual data is stored first in a memory space, and an end time 518 that indicates the end time of the last data. By referencing the start time 517 and the end time 518, the time range of data stored in the memory space can be referenced. This makes it easy to search for power consumption data in a specified time range. The table size of the memory space 505 is determined as follows. Assume that power consumption data is acquired every 30 minutes, that the number of houses included in an area/town is N, and that one-day data is stored for each area/town. In this case, the size of 24 x 2 x N = 48N pieces is the size in which data can be stored. When N = 1000, 48000 pieces of data can be stored and, in this case, the number of bytes corresponding to this value is stored in the table size. The data structuring function 208 retrieves the information 509 to 514, which is stored in the meta-table 501 and the memory space 505, from the acquired data in the key-value format. The remaining size 508 is initially set to the table size 507. This indicates that data is not used. The metadata number 506 contains a serial number. The previous metadata number 515 and the following metadata number 516 create a link 502 in the memory space. This link allows multiple areas/towns to be traced, making it easy to calculate the total of the power consumption value of the areas/towns.

The actual data 503 of power consumption data is stored in the memory space 505, and new data is added as shown by the reference numeral 504. As shown in FIG. 7C, the content of data stored in the memory space is a data acquisition start time 519, a data acquisition end time 520, a contracted electric power amount 521 based on the contract with a power company of a building, and measurement data value 522 acquired between the start time and the end time are stored. For a power consumption value and a storage power amount, the consumed power amount and generated/stored power amount between the start time and the end time are stored. In the case of power consumption, because there are multiple individual apparatuses in a building, a combination of the identification code of an individual apparatus and the power consumption amount of each apparatus may be acquired. An individual apparatus is, for example, a household electrical appliance, an air conditioner, and a lighting device. For apparatus data, the start time and the end time are the same and data indicating whether the apparatus is normal or abnormal at that time is described.

Step 405: Search for a building from which data cannot be acquired.

An area includes a building from which power consumption data cannot be acquired. When a large amount of power consumption data is acquired from individual buildings, the data may not be acquired due to a fault in a communication line or due to a failure in a communication device. In such a case, the power consumption value is estimated.

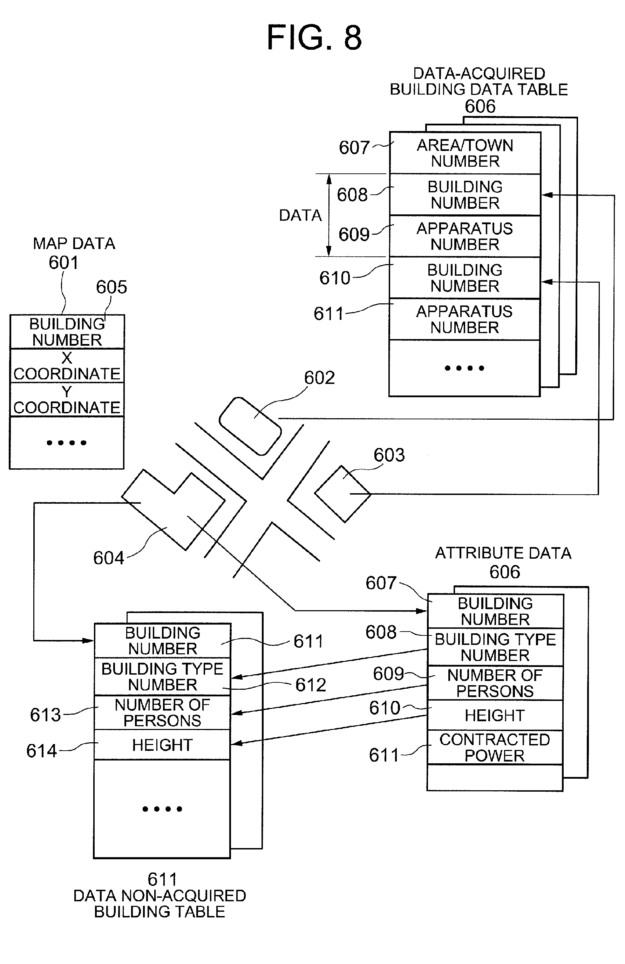

In such a case, a power consumption value is estimated using the map database 216, attribute database 217, and history database 214. Map data on a referenced area/town is used to determine from which building the data cannot be acquired. FIG. 8 shows this identification method.

The in-memory modeling function 209 starts the data search function 211 to search the map database 216 for map data 601 of a referenced area. The map data 601 is the vector data of coordinate rows. Building data and the shape indicating a town are represented by vector data. A building number 605 is attached to vector data. A building number is unique among all buildings. The building number of a building, from which power consumption data and storage data can be acquired, is stored in advance in a data-acquired building data table 606. This table includes an area/town number 607, a building number 608, and an apparatus number 609 that is the number of an HEMS or BEMS included in the building. Multiple apparatus numbers 609 are described for one building number 608. If this data is available, the building number 605, attached to the building shape of map data, can be compared with the building number 608, included in the data-acquired building data table 606, to obtain a building number not included in the data-acquired building data table 606. Referring to FIG. 8, the building numbers (608, 610) of buildings 602 and 603 of map data are included in the data-acquired building data table 606. However, because the building number of a building 604 is not included in the apparatus data, the building number is stored in a data non-acquired building table 611. Such data in the data-acquired building data table 606 is registered in advance from the buildings that have agreed to the transmission of data.

The data search function 211 searches for a house (604) the building number of which is included in the map data but not included in the data-acquired building data table 606. The house that has been searched for is registered in the data non-acquired building table 611 as a building from which data cannot be acquired. Next, for a building number 607 included in the data non-acquired building table 611, the data search function 211 searches the attribute database 217 for attribute data 606 related to the map data 601. The data search function 211 can search for attribute data by using latitude and longitude, which indicate a range of a map, as the key of the attribute database 217. The building number 607 included in this attribute is the same as the building number 605 in the map data, and a building type number 608, a number of persons in the building 609, and a height 610 are searched for as the attribute. The building type number 608, number of persons in the building 609, and height 610 are stored in the data non-acquired building table 611 corresponding to the building number.

The data-acquired building table 606 and the data non-acquired building table 611 are reviewed and updated periodically. After the data-acquired building table 606 is generated, data included in the table may be erased due to an apparatus abnormality. In this case, the erased data is added to the data non-acquired building table 611.

Step 406: Estimate the power consumption amount of a building corresponding to non-acquired data.

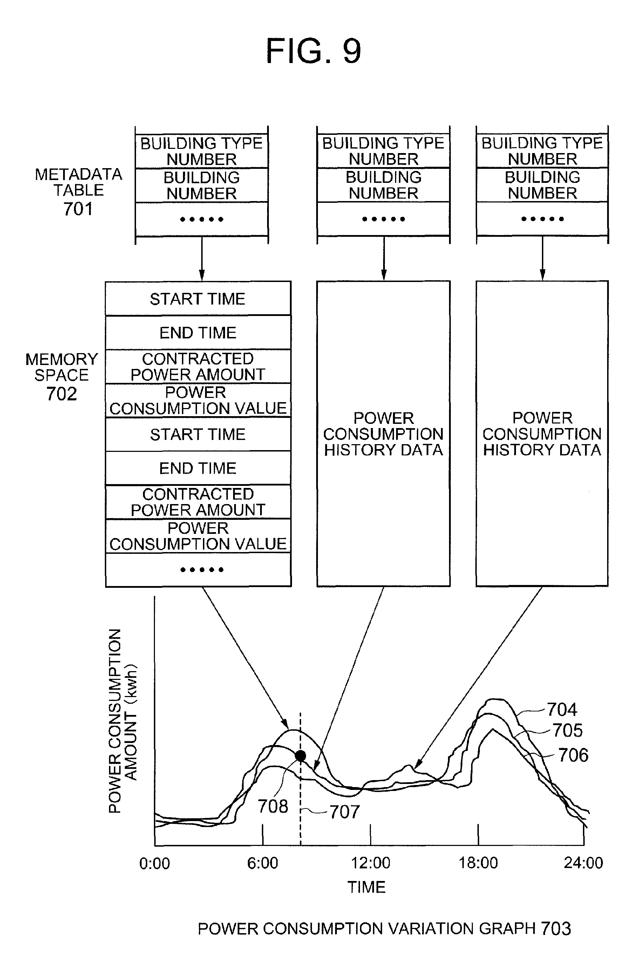

A building from which power consumption data cannot be acquired is identified by the method shown in step 405 in which map data and attribute data are used. Next, the following describes a method for estimating the power consumption value of such a building. The data search function 211 searches the history database 214 for the power consumption data on a building collected on the same day or on a day around the same day (within several weeks) using the building type number, height, and the number of persons as the key. When the power consumption amount differs between a weekday and a holiday, the data on that day is excluded. The reference numeral 701 in FIG. 9 indicates data in the metadata table, and the reference number 702 indicates actual data. This figure shows the power consumption variations of three similar buildings in the past, and the reference numerals 704, 705, and 706, shown in a power consumption variation graph 703, correspond to the power consumption variations. The in-memory modeling function 209 stores this data in the metadata table and the memory space in the memory in the same format as that in FIGS. 7B and 7C. At this time, the start time and the end time are past times. The non-acquired data value estimation function 221 calculates the time average of the acquired past power consumption data to generate new data. The power consumption value CE of a data non-acquired building is calculated by expression (1.1) given below, where $CE_i$ is the power consumption values at a particular start time and end time in the past ($i=1, 2, 3, ... N$; N is the number of pieces of past power consumption data).

$$CE = (CE1 + CE2 + \dots CEN)/N \quad \dots (1.1)$$

The data obtained as an execution result of expression (1.1) is held as in-memory data to store it later in the analytics database 215. In this case, the data type number 511 is a number indicating the data estimation result. FIG. 9 shows the calculation of an average value 708 at a time 707.

Step 407: Repeat the power consumption estimation values of data non-acquired houses.

The non-acquired data value estimation function 221 repeats the processing of step 406 for the buildings, each of which corresponds to a building number described in the data non-acquired building table 611, to calculate the power consumption value. If the calculation is ended, the processing proceeds to step 408. If the calculation is not ended, the processing returns to step 406.

Step 408: Eliminate incompatible data.

Sometimes, an acquired power consumption value is an impossible value due to a failure in the power measurement apparatus. For example, when the power consumption value far exceeds the contracted power amount, the power consumption of an office building on a holiday indicates the power consumption of a weekday. In such a case, the abnormality data analysis function 224 determines that a failure is generated based on the status of the past power consumption and corrects the data.

The abnormality data analysis function 224 searches for a building whose power consumption value 522 of a building expanded into the in-memory (shown in FIG. 7C) is larger than the contracted electric power amount 521. After that, the abnormality data analysis function 224 starts the data search function 211 to search the history database 214 for the history of the power consumption amount of a similar building and calculates the time average as in step 405. The data format is similar to that shown in FIGS. 7B and 7C, the data of the metadata table is as shown by the reference numeral 701, and the measured data of the memory space is as shown by the reference numeral 702. The abnormality data analysis function 224 calculates the time average of these data. The abnormality data analysis function 224 compares the acquired power consumption value with the time average value. If the following relation is satisfied, the data is an abnormal data candidate where CE is the acquired power consumption value and AE is the average power consumption amount.

$$|CE - AE| > \varepsilon \dots (1.2)$$

Next, to determine whether this abnormality is caused by an apparatus failure, the abnormality data analysis function 224 starts the journal analysis function 220 to search the in-memory for the acquired apparatus data.

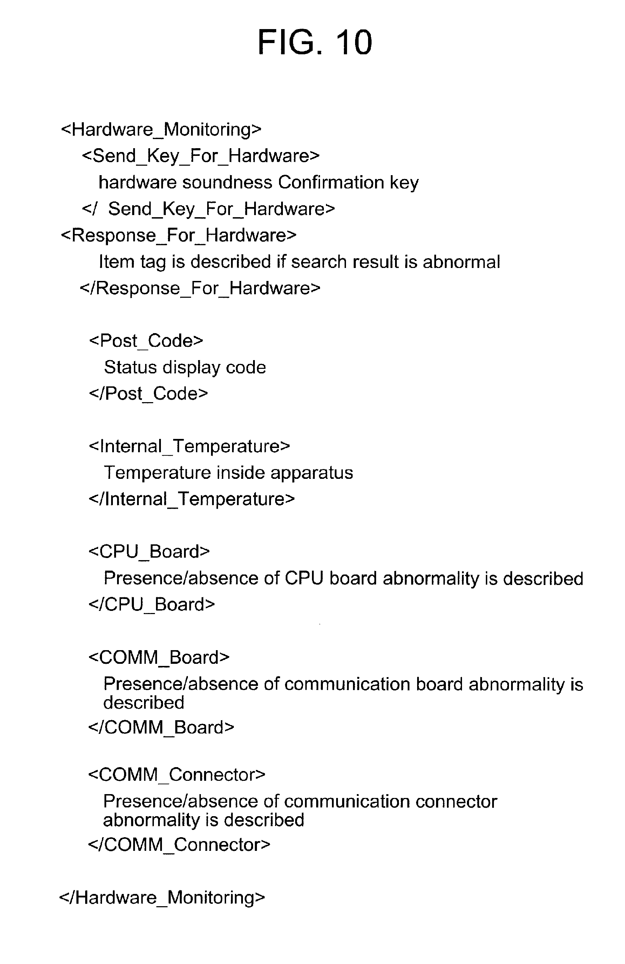

FIG. 10 shows an example of the configuration of the measured values of apparatus data. In this example, an internal temperature (Internal_Temperature), a CPU board abnormality (CPU_Board), a communication board abnormality (COMM_Board), a communication connector abnormality (COMM_Connector) are described. If an abnormality (Anomaly) is described for them, it is assumed that an apparatus abnormality is generated.

If abnormal power consumption data is acquired, the abnormality data analysis function 224 references the apparatus data and determines whether:

(1) an abnormality is described in the latest journal data,
(2) journal acquired in the past is lost, or
(3) a malfunction occurs.

For (1), if an index of abnormality has been detected for a predetermined period to the current time, it is assumed that an abnormality is generated and that the acquired power consumption data is abnormal. For (2), it is determined whether there is a loss in the last predetermined period of time up to and including the current time. If the ratio of the loss to the data-acquisition is higher than a predetermined ratio, it is assumed that a data abnormality is generated. For (3), the internal temperature value described in the apparatus data is referenced and, if the internal temperature is higher than a predetermined setting temperature, it is determined that a malfunction occurs. It is determined that an apparatus abnormality is generated in the case of (1) and (2) and that a malfunction is generated in the case of (3) and, after detecting the abnormality, a data acquisition is accepted. Power consumption data on an apparatus, which is determined abnormal, is not accepted. At this time, this apparatus data is registered in the data non-acquired building table 611. This prevents power consumption data from being used as data even if it is acquired from those apparatuses. A part abnormality, if included in the journal of a power apparatus in which an abnormal value is detected, is determined also as an apparatus abnormality.

In addition, if data is not acquired from a building from which data is to be acquired, the abnormality data analysis function 224 starts the journal data analysis function 220 to search the in-memory to determine whether the apparatus data is acquired in the past. If the apparatus data is not searched for, it is determined that an abnormality is generated in the apparatus.

Step 409: Determine an apparatus abnormality.

If it is determined that an apparatus abnormality is generated and the power consumption data cannot be acquired or if the acquired data is ignored, step 405 is executed to estimate the power consumption value as non-acquired data. Otherwise, step 410 is executed.

Step 410: Calculate the total of consumption amount of the whole area/town.

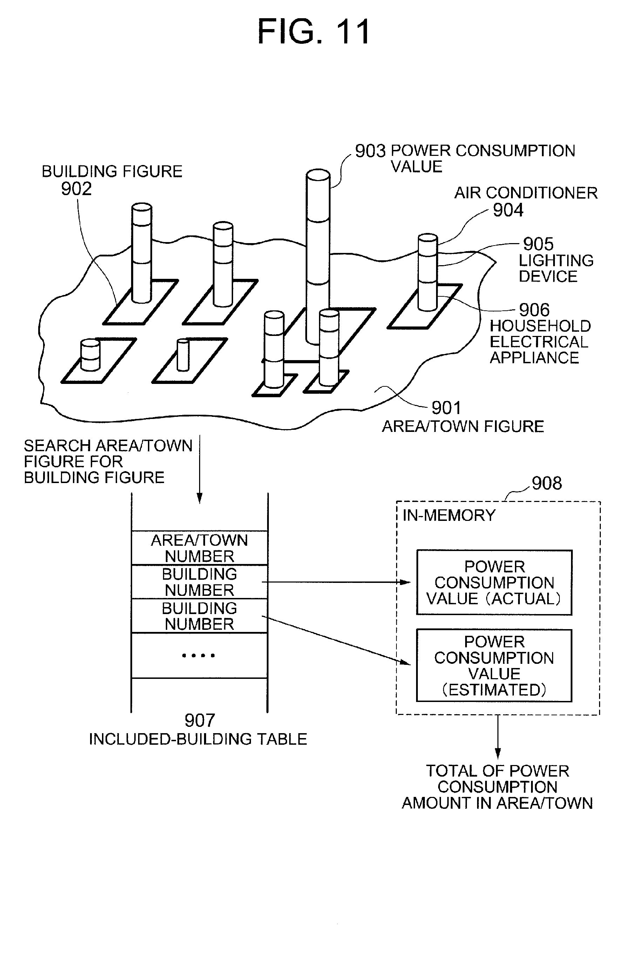

The statistical analysis function 222 calculates the total of the contracted power amounts and the power consumptions of each area/town. FIG. 11 shows how to calculate the total. If map data is not loaded into the actual memory space by the in-memory modeling function 209, the data search function 211 searches the map database 216 for the map data in advance and loads it into the actual memory for use in the total calculation. In this way, the statistical analysis function 222 searches for an area/town figure 901 described in the map data, searches for building figures 902 included in this range, and creates an included-building table 907 that is a list containing the correspondence between building numbers and area/town numbers. The statistical analysis function 222 references the included-building table 907, references the building numbers included in an area/town, and acquires the actual data on the power consumption value, corresponding to the same building number, from the metadata table included in-memory data 908. For a building from which data cannot be acquired, the statistical analysis function 222 acquires data from the in-memory because the data estimated in step 406 is stored in the in-memory. Because these acquired data is stored in the in-memory data 908, the statistical analysis function 222 calculates the total of the data as the power consumption data on the area/town. Note that the power consumption value 522 in FIG. 7 indicates the power consumed between the start time 519 and the end time 520 and that the data on the power consumption at the same time is not described for all buildings. In such a case, the power consumption data with the start time and the end time, which are closest to the time zone for which the total is calculated, is used.

If power consumption data 904, 905, and 906 is collected for individual apparatuses (air conditioner, lighting device, household electrical appliance) as shown in FIG. 11, the total is calculated for each of the individual apparatuses. Displaying these data allows the power consumption status of an area/town to be referenced from another point of view.

Step 411: Determine whether it is a time for discharge.

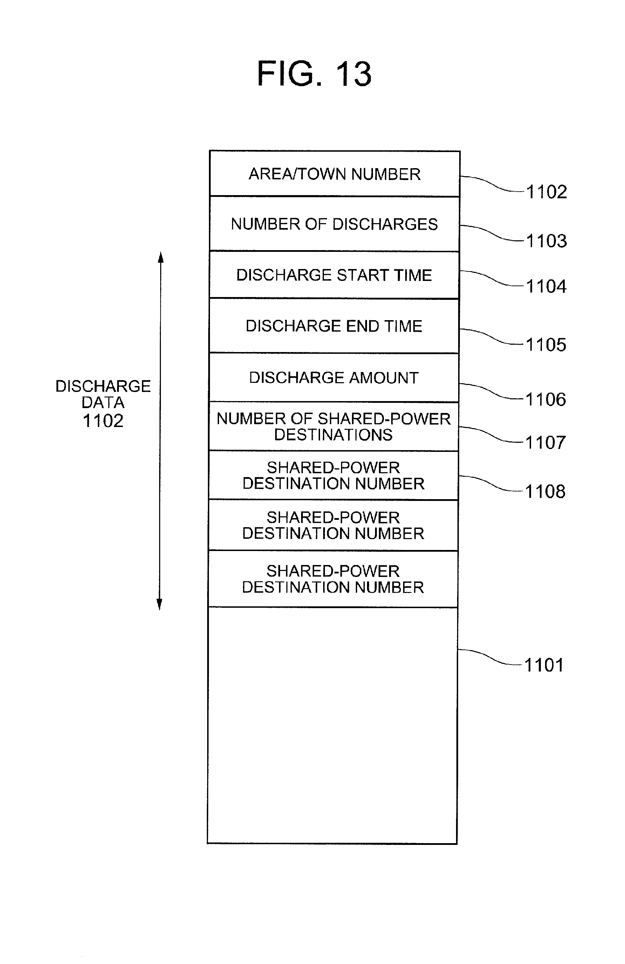

A check is made to determine whether it is a time for a predetermined discharge. If the power is discharged, step 412 is executed. If the power is not discharged, step 413 is executed. The power may be discharged from a storage battery installed in multiple areas/towns. To do so, a discharge management table (reference numeral 1101 in FIG. 13) is prepared to define the correspondence among a discharge time and a discharge amount, an area/town that includes a storage battery from which power is discharged, and a town to which power is supplied at discharge time. The power is discharged when the discharge time arrives.

Step 412: Discharge power.

The power control function 225 references the discharge management table to discharge power from a storage battery in an area/town with a corresponding discharge time. The discharge power is consumed by an area/town that includes the storage battery and an area/town to which shared electric power is supplied. After discharging the power, step 413 is executed.

Step 413: Calculate the power urgency of an area/town.

For each area/town, the ratio between the total of contracted power AE and the power consumption CE calculated in step 410 is determined from the total calculation result calculated in step 410. If the following is satisfied, it is determined that the area/town is in the discharge request state.

$$ACE/AAE > \delta \ldots (1.3)$$

where AAE is the contracted electric power of area/town A and ACE is the power consumption. Therefore, the trend forecasting function 219 forecasts variations using the history data. The trend forecasting function 219 performs this forecasting for all areas/towns.

Step 414: Forecast a power consumption variation in an area/town.

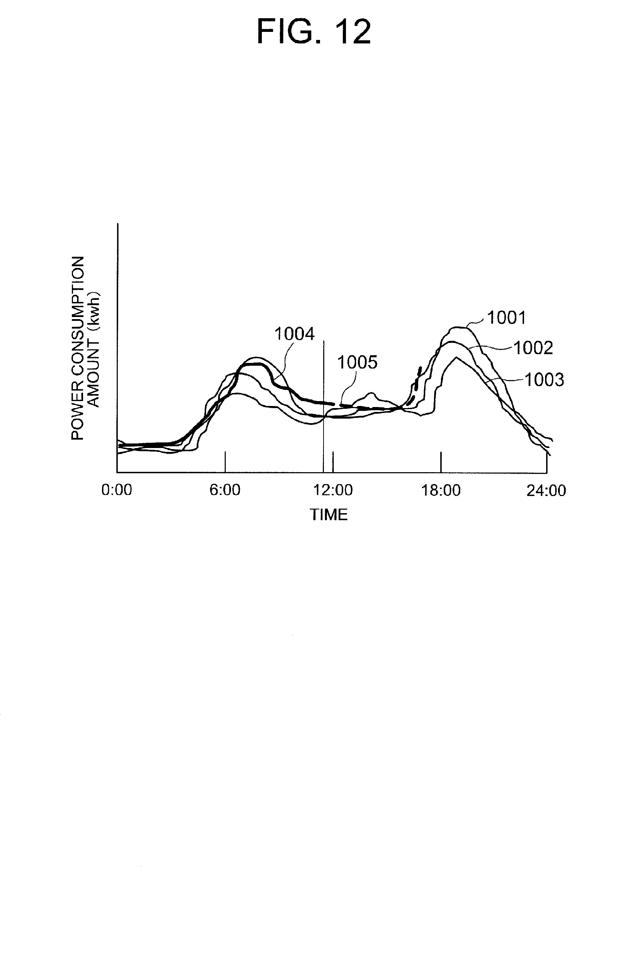

The trend forecasting function 219 starts the data search function 211 to search the analytics database 215 for the power consumption data corresponding to each area/town. This data is also expanded in the in-memory by the in-memory modeling function 209, in which case the building number 513 in the meta-table 501 is set to NULL and the data type number 511 is set to the number indicating the average of the power consumption of an area/town. The variation data is obtained by calculating the average. In FIG. 12, the trend forecasting function 219 searches for history data 1001, 1002, and 1003 and acquires the average variation. After that, the trend forecasting function 219 calculates the variation speed at the current time. The variation speed AV(t0) is calculated as follows.

$$AV(t0) = (ACE(t0) - ACE(t0 - \Delta t))/\Delta t \ldots (1.4)$$

where AV(t0) is the variation speed at the current time, ACE(t0) is the total value of power consumption in the area/town at the same time of day, and ACE(t - $\Delta$t) is the total value of power consumption at $\Delta$t before. The trend forecasting function 219 calculates the power variation speed value for all data collection times. After that, for the power consumption value AE(t0) at the current time of day t0, the trend forecasting function 219 forecasts the power, which will be consumed after $\Delta$t, using the following expression.

$$APE(t0 + \Delta t) = CE(t0) + AV(t)\Delta t \ldots (1.5)$$

This calculation is performed all areas/towns. The values at all sampling times are calculated. The result will be used in step 417 in which power is discharged or shared.

As a result, if the comparison between the forecast value APE(t0 + $\Delta$t) and the contracted power AAE is

$$APE(t0 + \Delta t)/AAE > \delta \ldots (1.6)$$

the area/town becomes a candidate for discharge or power sharing.

Step: 415: Determine the discharge time.

The discharge time is scheduled once a day, a predetermined time, or when it is determined in step 413 that there is a high demand for power. When the discharge time is scheduled, step 416 is executed. If the discharge time is not scheduled, step 421 is executed.

Step 416: Calculate the dischargeable amount.

SE + NE - RE is calculated as the data that is received from the storage sensor 203, and SE is replaced by the calculated value where SE is the total storage amount value acquired in the past and described as the storage data, NE is the newly acquired storage amount, and RE is the amount of discharge if the power is discharged in step 412. The calculated value is stored in the in-memory.

Step 417: Calculate the discharge power amount and the shared power amount.

There is a plurality of methods for calculating the discharge amount and the shared power amount. The following describes one of the methods. Another calculation method, if used, does not affect the step that is executed.

In an area/town that has a storage battery facility, the amount of power that can be used in the area/town and the amount of power that can be shared are calculated. First, the discharge amount for a peak-shift is determined for each area/town in advance.

To do so, the maximum power consumption amount in each area is calculated from the forecast power consumption amount. Assume that the storage amount stored to the start of discharge in town 1 is UE1 when power is obtained via power storage and power sharing. The power discharge time zone is predetermined. The shared power amount is m ($0 <= m <1$) times of the discharge amount. When power cannot be supplied to other areas/towns, m = 0. Therefore, when the storage power amount is UE, the amount of discharge power to the same area/town is (1 - m)UE and the amount of power supplied to other towns is mUE. When the number of areas/towns to which shared power is supplied is N, the amount of power equal to m/n x UE is supplied to one town. Thus, the electric power AE1(t) that can be used for storage and sharing at each time in area/town 1 is calculated as follows.

$$AE1(t) = (1 - m)UE1 \times AE1(t)/(AE1(t) + AE1(t + \Delta t) + \ldots + AE1(t + n\Delta t)) +$$

$$m'UEp1 + m''UEp2 +++m(k)UEpk \ldots (1.7)$$

where m' indicates the amount of shared power supplied from other areas/towns to area/town 1.

Expression (1.7) indicates that power is discharged according to the power consumption value that varies from time to time. In the expression, mUEpi ($i = 2, 3, \ldots , k$) is the amount of shared power of the area/town that is the shared-power source. mUEpi = 0 when shared power cannot be supplied from other areas/towns.

For example, it is possible to employ a method in which shared-power is supplied if expression (1.3) in step 413 is satisfied but not supplied if the expression is not satisfied.

Step 418: Create a list of discharge amounts and discharge times.

The electric power amount of regionally generated/stored power determined in step 417 for discharge and power sharing is stored in the discharge control table 1101 such as that shown in FIG. 13. The power is discharged, one piece of discharge data 1102 at a time. The area/town number 1102 indicates the number of an area/town in which power is discharged, and the number of discharges 1103 indicates the number of time units for discharge. A unit is a time interval indicated by the discharge start time 1104 and the discharge end time 1105. The discharge amount 1106 indicates the amount of power discharged between the discharge start time 1104 and the discharge end time 1105. This is the total amount of discharge in one time unit, and the discharge power is increased linearly. The number of shared-power destinations 1107 indicates the number of areas/towns to which power is supplied, and the number of a shared-power destination is stored in the field 1108 and the following fields.

Step 419: Store structured data.

The data storage function 207 stores structured power consumption data, storage data, and apparatus data, stored in the in-memory, in the history database 214.

Step 420: Acquire trend knowledge.

Because the power consumption trend shows a predetermined pattern, the trend knowledge acquisition function 223 acquires a variation pattern as knowledge. Thus, the trend knowledge acquisition function 223 integrates the changes in daily power consumption at the end of a day. The unit of integration is as follows.

- Monthly change (weekday)
- Monthly change (holiday)
- Monthly change (weekday, holiday)
- Long vacation (three or more consecutive holidays)

In addition, the above periodic data is classified according to the following building type.

- Home (with resident)
- Home (without resident)
- Commercial facilities
- Restaurant
- Office
- Public facilities (school, city office)

- Public medical facilities (hospital)
- Public infrastructure (power plant, filtration plant)
- Factory

In addition, power consumption data is integrated according to the locations.

- Area/town

Facilities may be classified, not uniquely, but according to other classifications. The data search function 211 searches the attribute database 217 for a building type number corresponding to the building classification described above. In addition, the data search function 211 searches the history database 214 for power consumption data corresponding to each building type on an area basis and stores the result in the in-memory. The trend knowledge acquisition function 223 calculates the average value of these past power consumption data and the latest power consumption data according to the classification described above and stores the result in the in-memory. The data storage function 207 stores the averaged data in the analytics database 215 as an analysis result.

Step 421: Repeat the processing.

By repeating steps 401 to 420, the power consumption in an area/town is optimized.

Power consumption, if not acquired in an area/town in steps 401 to 421, can be estimated using the attribute data related to the map data and the power consumption data on similar buildings.

Power discharged under control of the area manager 321 is different from company-supplied power, the electricity charge differs from that of company-supplied power. Therefore, the use of company-supplied power and the use of regionally generated/stored power must be distinguished. In this case, the following condition must be taken into consideration.

(1) Power distribution facilities

The following two are considered for use of power distribution facilities.

(a) Regionally generated/stored power is distributed using existing power distribution facilities. By using existing power distribution facilities, power is discharged by a reverse power flow and is supplied to a predetermined area/town.

(b) Regionally generated/stored power is distributed using its own power distribution facilities. Therefore, when using electric power, it is necessary to select power facilities to be used.

(2) Consumers

Electric power consumers are classified according to whether discharge power is used.

(c) All consumers in an area/town contract with the area manager for the use of regionally generated/stored power.

(d) Not all consumers in an area/town contract with the area manager. This means that some consumers are not informed about the use of generated power or storage power. In the case of a combination of (b) with (c) or with (d), electric power that is used can be distinguished by which power distribution facilities are selected. Therefore, it is possible to prevent a consumer, who does not agree with the contract or with power consumption data transmission, from using regionally generated/stored power.

In the case of a combination of (a) and (c), the electricity usage charge can be adjusted by transmitting information on the discharge amount of a storage battery, or this information as well as information on a shared-power destination area/town, via the power meter (314, 316) of the company-supplied power operator. In this case, assuming that all consumed power is supplied from the operator, the company-supplied power operator once collects the electricity charge, then, purchases the regionally generated/stored power and pays the charge to the area manager. After that, the charge is refunded from the area manager to the consumer who supplied the discharge power. Therefore, the charge may be transferred using a device not shown.

In the case of a combination of (a) and (d), not only contracted consumers but also non-contracted consumers can use regionally generated/stored power. Therefore, an area manager calculates the electric power amount of discharge for each contracted building and refunds the charge. This method allows the charge on a building, which has not yet contracted with the area manager and therefore cannot use discharge power without permission, to be determined correctly.

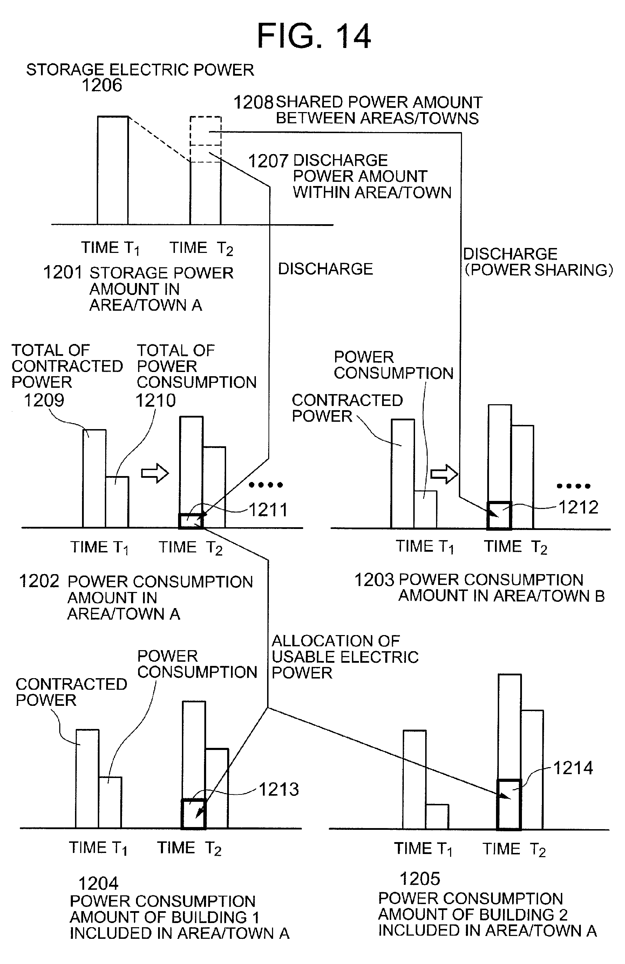

The power distribution method described above takes into consideration the power distribution on a building level. FIG. 14 shows this method. FIG. 14 shows the allocation of discharge from a storage battery to buildings. In this figure, area/town A supplies shared power to its own area/town and area/town B. It is easy to expand the range of shared power supply to more areas/towns. The reference numeral 1201 indicates the storage amount of area/town A. This graph indicated by the reference numeral 1201 indicates that not only discharge but also power sharing is performed at time T2 (> T1). That is, of the discharge power, the reference numeral 1207 indicates the discharge power amount consumed in area/town A and the reference numeral 1208 indicates shared power supplied to area/town B. The reference numerals 1202 and 1203 indicate the electric power contract amount and the power consumption amount in area/town A and area/town B respectively. The reference numerals 1209 and 1210 indicate the total contracted power amount and the total power consumption amount in area/town A respectively. The discharge power from the storage battery is indicated by the reference numerals 1211 and 1212. The discharge power, smaller in amount than the company-supplied power, is consumed before the company-supplied power. The power is allocated to a building because of the area/town total. FIG. 14 shows an allocation method according to the contracted electric power of a building as shown by the reference numerals 1204 and 1205. The amount of power that can be consumed by building k is represented by the expression

$$CEk = EE \times CEk/(CE1 + CE2 + \ldots + CEn) \ldots (1.8)$$

where $CEk(k = 1, 2, 3, \ldots n)$ is the contracted power amount of a building that can use the discharge power in area/town A and EE is the total consumable power amount. The amount of electric power that can be used by building 1 and building 2 included in area/town A is indicated by the reference numerals 1213 and 1214.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A power consumption management system for managing power consumed in an area where there is a plurality of buildings, said power consumption system comprising:

   storing means (217) that stores attribute data on each of the plurality of buildings in advance;
   acquisition means (205) that acquires power consumption data on at least a part of the plurality of buildings;
   search means (211) that searches for attribute data on a data-non-acquired building from which the power consumption data is not acquired;
   identification means (209) that identifies a data-acquired building which has attribute data, corresponding to attribute data that is searched for, and from which the power consumption data is acquired;
   estimation means (221) that estimates power consumption data on the data-non-acquired building using power consumption data on an identified data-acquired building; and
   management means (321) that manages the power based on estimated power consumption data and acquired power consumption data.

2. The power consumption management system according to claim 1 wherein
   the attribute data corresponding to attribute data that is searched for is attribute data that is equal or similar to the attribute data that is searched for.

3. The power consumption management system according to claim 1 wherein
   the attribute data includes a type, an area, a number of persons, and a height of the building.

4. The power consumption management system according to claim 1 wherein
   said acquisition means (205) acquires the power consumption data as well as storage data on the building and said management means (321) manages the power using the power consumption data on the data-acquired building, the power consumption data on the data-non-acquired building, and the storage data.

5. The power consumption management system according to claim 4 wherein
   said management means (321) forecasts a power consumption status in the area using the power consumption data on the data-acquired building, the power consumption data on the data-non-acquired building, and the storage data.

6.  A power consumption management method for managing power consumed in an area where there is a plurality of buildings, said power consumption method comprising:

    storing attribute data on each of the plurality of buildings in a storage device in advance;
    acquiring power consumption data on at least a part of the plurality of buildings;
    searching for attribute data on a data-non-acquired building from which the power consumption data is not acquired;
    identifying a data-acquired building which has attribute data, corresponding to attribute data that is searched for, and from which the power consumption data is acquired;
    estimating power consumption data on the data-non-acquired building using power consumption data on an identified data-acquired building; and
    managing the power based on estimated power consumption data and acquired power consumption data.

7.  The power consumption management method according to claim 6 wherein
    the attribute data corresponding to attribute data that is searched for is attribute data that is equal or similar to the attribute data that is searched for.

8.  The power consumption management method according to claim 6 wherein
    the attribute data includes a type, an area, a number of persons, and a height of the building.

9.  The power consumption management method according to claim 6 wherein
    the acquiring processing acquires the power consumption data as well as storage data on the building and
    the managing processing manages the power using the power consumption data on the data-acquired building, the power consumption data on the data-non-acquired building, and the storage data.

10. The power consumption management method according to claim 9 wherein
    said managing processing forecasts a power consumption status in the area using the power consumption data on the data-acquired building, the power consumption data on the data-non-acquired building, and the storage data.

# FIG. 1

# FIG. 2

HEMS — 201

BEMS — 202

STORAGE SENSOR — 203

204

DATA ACQUISITION FUNCTION — 205

STORAGE DATA GENERATION FUNCTION — 206

DATA STORAGE FUNCTION — 207

DATA STRUCTURING FUNCTION — 208

IN-MEMORY MANAGEMENT FUNCTION — 209

DATA SEARCH FUNCTION — 211

ANALYTICS INTERFACE FUNCTION — 210

STREAM DATABASE — 213

HISTORY DATABASE — 214

ANALYTICS DATABASE — 215

MAP DATABASE — 216

ATTRIBUTE DATABASE — 217

218

NON-ACQUIRED DATA VALUE ESTIMATION FUNCTION — 221

JOURNAL ANALYSIS FUNCTION — 220

TREND KNOWLEDGE ACQUISITION FUNCTION — 223

APPLICATION INTERFACE FUNCTION — 212

POWER CONTROL APPLICATION — 225

ABNORMALITY ANALYSIS DETERMINATION FUNCTION — 224

TREND FORECASTING FUNCTION — 219

STATISTICAL ANALYSIS FUNCTION — 222

200

EP 2 813 979 A1

18

# FIG. 3

301 COMPANY-SUPPLIED POWER LINE

302 TRANSFORMER

303

310 POWER SUPPLY LINE

TO COMPANY-SUPPLIED POWER SUPPLIER

312  313  314  315

313  305  314  306  307

315  316  317  309

316  308

AREA/TOWN 1

AREA/TOWN 2

304

305

311 COMMUNICATION NETWORK

AREA MANAGER  321

EP 2 813 979 A1

# FIG. 4

START

C

IS IT TIME TO ACQUIRE POWER RELATED DATA ? — 401

NO

YES

COLLECT POWER CONSUMPTION/STORAGE DATA — 402

STRUCTURE ACQUIRED DATA — 403

EXPAND STRUCTURED DATA INTO IN-MEMORY — 404

D

SEARCH FOR BUILDING FROM WHICH DATA CANNOT BE ACQUIRED — 405

ESTIMATE POWER CONSUMPTION AMOUNT OF BUILDING FROM WHICH DATA CANNOT BE ACQUIRED — 406

IS DATA ACQUIRED OR ESTIMATED FOR ALL BUILDINGS ? — 407

NO

YES

A

# FIG. 5

(A)

↓

ELIMINATE INCOMPATIBLE DATA — 408

↓

409
IS APPARATUS ABNORMALITY FOUND ? —— YES —→ (D)

NO
↓

CALCULATE TOTAL OF POWER CONSUMPTION AMOUNT OF AREA/TOWN — 410

↓

411
IS IT TIME FOR DISCHARGE ? —— YES —→ DISCHARGE POWER — 412

NO
↓

CALCULATE POWER URGENCY OF AREA/TOWN — 413

↓

FORECAST POWER CONSUMPTION VARIATION IN AREA/TOWN — 414

↓

(B)

# FIG. 6

B

415

**IS DISCHARGE TIME CALCULATED ?**

NO

YES

416

CALCULATE DISCHARGEABLE AMOUNT

417

CALCULATE DISCHARGE POWER AND POWER URGENCY LEVEL

418

CREATE LIST OF DISCHARGE AMOUNT AND DISCHARGE TIME

419

STORE STRUCTURED DATA

420

ACQUIRE TREND KNOWLEDGE

C

421

**IS PROCESSING TO BE REPEATED ?**

YES

NO

END

# FIG. 7A

502 LINK

501 META-TABLE

505 MEMORY SPACE

ADDITION OF DATA

DATA 503

ADDED DATA 504

# FIG. 7B

| METADATA NUMBER | 506 |
| TABLE SIZE | 507 |
| REMAINING SIZE | 508 |
| POSITION COORDINATES | 509 |
| AREA/TOWN NUMBER | 510 |
| DATA TYPE NUMBER | 511 |
| SPACE ADDRESS | 512 |
| BUILDING NUMBER | 513 |
| APPARATUS NUMBER | 514 |
| PREVIOUS METADATA NUMBER | 515 |
| FOLLOWING METADATA NUMBER | 516 |
| START TIME | 517 |
| END TIME | 518 |

# FIG. 7C

| | |
| --- | --- |
| 519 | START TIME |
| 520 | END TIME |
| 521 | CONTRACTED ELECTRIC POWER AMOUNT |
| 522 | MEASUREMENT DATA (POWER CONSUMPTION VALUE, APPARATUS DATA, ETC.) |

# FIG. 8

DATA-ACQUIRED
BUILDING DATA TABLE
606

607 — AREA/TOWN NUMBER

608 — BUILDING NUMBER

DATA

609 — APPARATUS NUMBER

610 — BUILDING NUMBER

611 — APPARATUS NUMBER

. . . .

MAP DATA
601

605

BUILDING NUMBER

X COORDINATE

Y COORDINATE

. . . .

602

603

604

ATTRIBUTE DATA
606

607 — BUILDING NUMBER

608 — BUILDING TYPE NUMBER

609 — NUMBER OF PERSONS

610 — HEIGHT

611 — CONTRACTED POWER

611 — BUILDING NUMBER

612 — BUILDING TYPE NUMBER

613 — NUMBER OF PERSONS

614 — HEIGHT

. . . .

611
DATA NON-ACQUIRED
BUILDING TABLE

# FIG. 9

METADATA TABLE 701

| BUILDING TYPE NUMBER |
| --- |
| BUILDING NUMBER |
| • • • • • |

| BUILDING TYPE NUMBER |
| --- |
| BUILDING NUMBER |
| • • • • • |

| BUILDING TYPE NUMBER |
| --- |
| BUILDING NUMBER |
| • • • • • |

MEMORY SPACE 702

| START TIME |
| --- |
| END TIME |
| CONTRACTED POWER AMOUNT |
| POWER CONSUMPTION VALUE |
| START TIME |
| END TIME |
| CONTRACTED POWER AMOUNT |
| POWER CONSUMPTION VALUE |
| • • • • • |

POWER CONSUMPTION HISTORY DATA

POWER CONSUMPTION HISTORY DATA

POWER CONSUMPTION AMOUNT (kwh)

704
705
706

708 707

TIME

0:00    6:00    12:00    18:00    24:00

POWER CONSUMPTION VARIATION GRAPH 703

# FIG. 10

```
<Hardware_Monitoring>
   <Send_Key_For_Hardware>
      hardware soundness Confirmation key
   </ Send_Key_For_Hardware>
<Response_For_Hardware>
      Item tag is described if search result is abnormal
   </Response_For_Hardware>


   <Post_Code>
      Status display code
   </Post_Code>


   <Internal_Temperature>
      Temperature inside apparatus
   </Internal_Temperature>


   <CPU_Board>
      Presence/absence of CPU board abnormality is described
   </CPU_Board>


   <COMM_Board>
      Presence/absence of communication board abnormality is
      described
   </COMM_Board>

   <COMM_Connector>
      Presence/absence of communication connector
      abnormality is described
   </COMM_Connector>


</Hardware_Monitoring>
```

# FIG. 11

BUILDING FIGURE
902

903 POWER CONSUMPTION
VALUE

AIR CONDITIONER
904

905
LIGHTING
DEVICE

906
HOUSEHOLD
ELECTRICAL
APPLIANCE

901
AREA/TOWN FIGURE

SEARCH AREA/TOWN
FIGURE FOR
BUILDING FIGURE

| AREA/TOWN NUMBER |
| BUILDING NUMBER |
| BUILDING NUMBER |
| . . . . |

907
INCLUDED-BUILDING TABLE

908

IN-MEMORY

| POWER CONSUMPTION VALUE (ACTUAL) |
| POWER CONSUMPTION VALUE (ESTIMATED) |

TOTAL OF POWER
CONSUMPTION
AMOUNT IN AREA/TOWN

# FIG. 12

POWER CONSUMPTION AMOUNT (kwh)

1004

1005

1001

1002

1003

0:00    6:00    12:00    18:00    24:00

TIME

# FIG. 13

DISCHARGE
DATA
1102

| AREA/TOWN NUMBER | 1102 |
| NUMBER OF DISCHARGES | 1103 |
| DISCHARGE START TIME | 1104 |
| DISCHARGE END TIME | 1105 |
| DISCHARGE AMOUNT | 1106 |
| NUMBER OF SHARED-POWER DESTINATIONS | 1107 |
| SHARED-POWER DESTINATION NUMBER | 1108 |
| SHARED-POWER DESTINATION NUMBER | |
| SHARED-POWER DESTINATION NUMBER | |
| | 1101 |

# FIG. 14

STORAGE ELECTRIC POWER
1206

1208 SHARED POWER AMOUNT
BETWEEN AREAS/TOWNS

1207 DISCHARGE
POWER AMOUNT
WITHIN AREA/TOWN

TIME T$_1$    TIME T$_2$

1201 STORAGE POWER
AMOUNT IN
AREA/TOWN A

DISCHARGE

DISCHARGE
(POWER SHARING)

TOTAL OF          TOTAL OF
CONTRACTED     POWER
POWER              CONSUMPTION
1209                 1210

POWER
CONSUMPTION

CONTRACTED
POWER

1211

TIME T$_1$    TIME T$_2$

1202 POWER CONSUMPTION
AMOUNT IN
AREA/TOWN A

1212

TIME T$_1$    TIME T$_2$

1203 POWER CONSUMPTION
AMOUNT IN AREA/TOWN B

ALLOCATION OF
USABLE ELECTRIC
POWER

POWER
CONSUMPTION

CONTRACTED
POWER

1213

TIME T$_1$    TIME T$_2$

1204
POWER CONSUMPTION
AMOUNT OF BUILDING 1
INCLUDED IN AREA/TOWN A

1214

TIME T$_1$    TIME T$_2$

1205
POWER CONSUMPTION
AMOUNT OF BUILDING 2
INCLUDED IN AREA/TOWN A

Europäisches
Patentamt

European
Patent Office

Office européen
des brevets

**EUROPEAN SEARCH REPORT**

Application Number

EP 14 17 2231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/307109 A1 (SRI-JAYANTHA SRI M [US]) 15 December 2011 (2011-12-15) <br> * abstract; figures 7-14 * <br> * paragraph [0011] - paragraph [0028] * <br> * paragraph [0094] - paragraph [0097] * <br> * paragraph [0100] - paragraph [0103] * | 1-10 | INV. <br> G06Q10/04 <br> G06Q50/06 |
| X | US 2011/231028 A1 (OZOG MICHAEL T [US]) 22 September 2011 (2011-09-22) <br> * abstract * <br> * paragraph [0016] - paragraph [0105] * <br> * figures 1,4 * | 1-10 | |
| X | US 2011/231320 A1 (IRVING GARY W [US]) 22 September 2011 (2011-09-22) <br> * abstract; figures 10,11,19,22,23 * | 1-10 | |
| X | US 2013/138285 A1 (BOZCHALUI MOHAMMAD CHEHREGHANI [US] ET AL) 30 May 2013 (2013-05-30) <br> * abstract * <br> * paragraph [0005] - paragraph [0007]; figure 3 * | 1-10 | TECHNICAL FIELDS SEARCHED (IPC) <br><br> G06Q |
| X | WO 2012/161804 A1 (CLEAN URBAN ENERGY INC [US]; UNIV COLORADO [US]; HENZE GREGOR P [US];) 29 November 2012 (2012-11-29) <br> * abstract * <br> * figures 4,9 * <br> * paragraph [0043] - paragraph [0047] * | 1-10 | |

The present search report has been drawn up for all claims

| Place of search | Date of completion of the search | Examiner |
|---|---|---|
| The Hague | 17 October 2014 | van der Weiden, Ad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 2231

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2014

| Patent document cited in search report | Publication date | Patent family member(s) | | Publication date |
|---|---|---|---|---|
| US 2011307109 A1 | 15-12-2011 | NONE | | |
| US 2011231028 A1 | 22-09-2011 | US | 2011231028 A1 | 22-09-2011 |
|  |  | US | 2014148963 A1 | 29-05-2014 |
| US 2011231320 A1 | 22-09-2011 | NONE | | |
| US 2013138285 A1 | 30-05-2013 | NONE | | |
| WO 2012161804 A1 | 29-11-2012 | US | 2013013121 A1 | 10-01-2013 |
|  |  | WO | 2012161804 A1 | 29-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012227928 A
- JP 2012165549 A
- WO 2012066651 A1
- JP 2012060789 A